# EUROPEAN PATENT APPLICATION

(11) **EP 2 423 084 A1**
(43) Date of publication of application: **29.02.2012**
(21) Application number: 11250746.2
(22) Date of filing: 30.08.2011
(51) Int. Cl.: B62J 6/00, B62K 19/00

(54) **Intrinsically illuminated tubular member of a bicycle and bicycle having same**

(30) Priority: 30.08.2010 US 378080 P; 29.08.2011 US 220062
(71) Applicant: Cycling Sports Group, Inc., Bethel, Connecticut 06801-2858 (US)
(72) Inventor: Yelverton, Forrest, Lyons, Colorado (US); Mikesell, Jeremy Floyd, Bethel, Connecticut (US); Dodman, Christopher Philip, Basel (CH)
(74) Representative: Faulkner, Thomas John

(57) **Abstract**

A bicycle includes at least one tubular member having a translucent section, and a light source disposed relative to the tubular member such that light transmission from the light source is permitted to pass from a region intrinsic to the tubular member to a region remote from the bicycle, the translucent section having an optical characteristic that permits the light transmission. The at least one tubular member includes a seat tube, a down tube, a top tube, a head tube, a seat stay tube, a chain stay tube, a seat post, a fork member, a lefty member, a suspension member, a handlebar, a crank arm, a wheel rim, or an accessory member

## Description

### CROSS REFERENCE TO RELATED APPLICATIONS

This application claims the benefit of U.S. Provisional Application Serial No. 61/378,080, filed August 30, 2010, which is incorporated herein by reference in its entirety.

### BACKGROUND OF THE INVENTION

The present disclosure relates generally to a bicycle, particularly to a bicycle having an intrinsically illuminated tubular member, and also particularly to a bicycle having an internally illuminated frame member.

Bicycles are available in many different frame styles, such as road bikes, mountain bikes, men's bikes, ladies bikes, hard tail bikes, suspension bikes, touring bikes, and electric-assist bikes, to name a few, and are made from many different materials, such as steel, stainless steel, aluminum and carbon fiber composite, to name a few. Bicycles are also available with many different accessories, such as racks and other luggage carriers or pouches, water bottles, and lights, to name a few. While all such bicycles may be well adapted and suitable for their intended purpose, there remains a need in the bicycle art for improvements in the area of materials and/or illumination, which can serve to reduce the carbon footprint of bicycles on the environment, and can serve to improve safety, identification and navigation in the use of bicycles.

This background information is provided to reveal information believed by the applicant to be of possible relevance to the present invention. No admission is necessarily intended, nor should be construed, that any of the preceding information constitutes prior art against the present invention.

### BRIEF DESCRIPTION OF THE INVENTION

An embodiment of the invention includes a bicycle having at least one tubular member having a translucent section, and a light source disposed relative to the tubular member such that light transmission from the light source is permitted to pass from a region intrinsic to the tubular member to a region remote from the bicycle, the translucent section having an optical characteristic that permits the light transmission. The at least one tubular member includes a seat tube, a down tube, a top tube, a head tube, a seat stay tube, a chain stay tube, a seat post, a fork member, a lefty member, a suspension member, a handlebar, a crank arm, a wheel rim, or an accessory member.

An embodiment of the invention includes a bicycle having at least one tubular member in the form of a seat tube, a down tube, a top tube, a head tube, a seat stay tube, a chain stay tube, a seat post, a fork member, a lefty member, a suspension member, a handlebar, a crank arm, a wheel rim, or an accessory member, where the at least one tubular member has a translucent section, and where a light source is disposed intrinsic to the at least one tubular member. The translucent section includes an optical characteristic that permits light transmission from the light source through the translucent section.

An embodiment of the invention also includes the foregoing bicycle wherein the at least one tubular member includes a seat tube, a head tube, and at least one of a down tube and a top tube operably connected between the head tube and the seat tube. The bicycle also includes a steerer member operably connected with the head tube, a handlebar operably connected with the steerer member, a rear frame member operably connected with the seat tube, a bottom bracket disposed at a bottom end of the seat tube, a seat disposed at a top end of the seat tube, a front wheel operably connected with the steerer member, a rear wheel operably connected with the rear frame member, a crank assembly operably connected with the bottom bracket, and a drive member operably connected between the crank assembly and the rear wheel.

### BRIEF DESCRIPTION OF THE DRAWINGS

Referring to the exemplary non-limiting drawings wherein like elements are numbered alike in the accompanying Figures:

Figure 1 depicts a left side view of an example bicycle for use in accordance with an embodiment of the invention;

Figure 2 depicts a left side view of a portion of the bicycle of Figure 1;

Figures 3-8 depict left side views of alternative bicycles to that of Figure 1;

Figures 9-10 depict right side views of other alternative bicycles to that of Figure 1;

Figure 11 depicts a right side view of a portion of the bicycle of Figure 10, with intrinsically disposed light sources in accordance with an embodiment of the invention;

Figure 12 depicts a right side view of the bicycle of Figure 10, with intrinsically illuminated translucent sections of the bicycle frame in accordance with an embodiment of the invention;

Figure 12A depicts the same right side view of the bicycle of Figure 12, but with some non-illuminated members of the bicycle and frame illustrated in dashed line form to provide context of illuminated sections relative to non-illuminated sections;

Figures 13-16 depict portions of alternative light sources in accordance with an embodiment of the invention;

Figure 17A depicts a portion of a tubular member having a light source intrinsically disposed with respect to the tubular member, in accordance with an embodiment of the invention;

Figure 17B depicts a cross section view of a portion of the tubular member of Figure 17A;

Figure 17C depicts a cross section view of a representation of an organic light emitting diode (OLED) for use in accordance with an embodiment of the invention;

Figure 18 depicts a schematic block diagram of a light source arrangement and control scheme in accordance with an embodiment of the invention; and

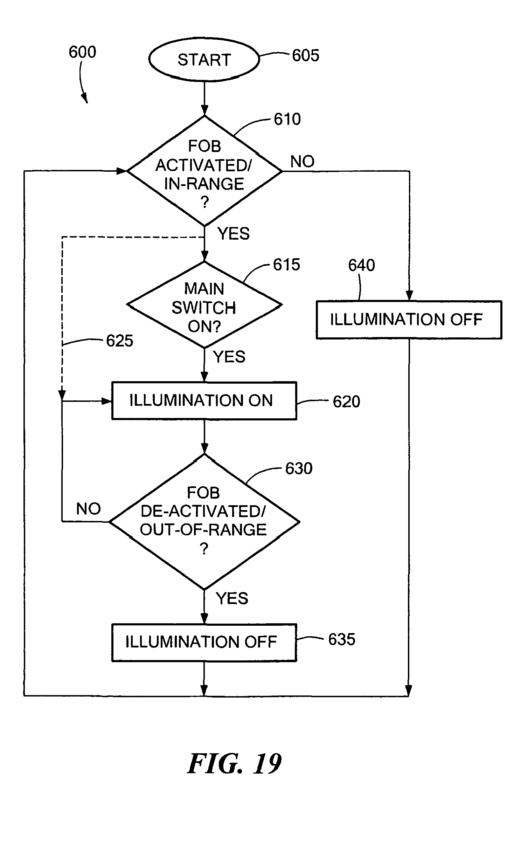

Figure 19 depicts in flowchart form a process in accordance with an embodiment of the invention.

### DETAILED DESCRIPTION OF THE INVENTION

Although the following detailed description contains many specifics for the purposes of illustration, anyone of ordinary skill in the art will appreciate that many variations and alterations to the following details are within the scope of the invention. Accordingly, the following embodiments of the invention are set forth without any loss of generality to, and without imposing limitations upon, the claimed invention.

An embodiment of the invention, as shown and described by the various figures and accompanying text, provides a bicycle having a light source intrinsically disposed with respect to a tubular member of the bicycle, where the tubular member is constructed at least partially of translucent material having an optical characteristic that permits light transmission therethrough from the light source intrinsically disposed with respect thereto. While embodiments described herein depict certain bicycle frame styles as example embodiments suitable for having an intrinsically illuminated tubular member, it will be appreciated that the disclosed invention is not limited to only those embodiments depicted, and also encompasses other frame styles that fall within the ambit of the disclosed invention.

An embodiment of the invention provides an arrangement where the tubular member of the bicycle is a part of a frame of the bicycle, and the light source is disposed within the tubular member.

Another embodiment of the invention provides an arrangement where the light source is an organic light emitting diode (OLED) that is formed integrally with the tubular member, thereby making the light source a part of, or intrinsic to, the tubular member.

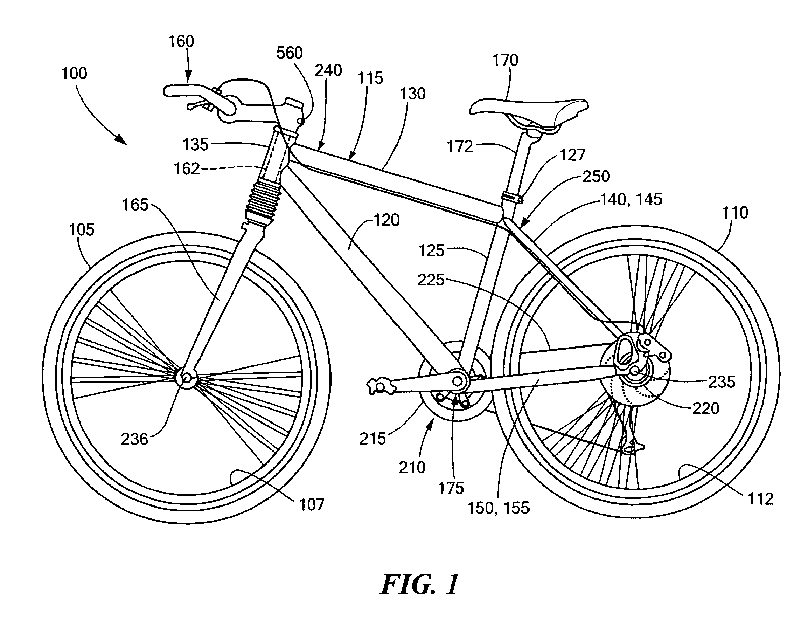

Figure 1 is an example embodiment of a bicycle 100 (left side view) having a front wheel 105, a rear wheel 110, and a frame 115 disposed and connected between the two wheels 105, 110. Each wheel 105, 110 includes an inflatable tire 106, 111, supported by a rim 107, 112, respectively. In an embodiment, the frame 115 includes a down tube 120, a seat tube 125, a top tube 130, a head tube 135, seat stay tubes 140, 145 (one on each side of the rear wheel 110), and chain stay tubes 150, 155 (one on each side of the rear wheel 110). Seat stay tubes 140, 145 and chain stay tubes 150, 155 are connected to the rear wheel 110 at the rear wheel axle 235. A handle bar 160 connects to a front fork 165 via a steerer tube 162 disposed within the head tube 135, and the front fork 165 connects with the front wheel 105 at the front wheel axle 236 for steering thereof. The steerer tube 162 has a rotational degree of freedom with respect to the head tube 135 about a longitudinal axis of the head tube 135. A seat 170, suitably configured for supporting a rider, is adjustably supported by the seat tube 125 via a seat post 172 and clamp 127. In an embodiment, front fork 165 may be replaced by a one-sided "fork", which in some instances is configured and referred to in the bicycle art as a lefty fork, but in other instances may be configured and referred in the bicycle art as to as a righty fork. The front fort 165, lefty fork, or righty fork, may be rigid in construction, or may include a suspension system (not specifically illustrated). Reference herein to front fork 165 is intended to include not only a two-sided fork, but also a one-sided fork, such as a lefty or a righty.

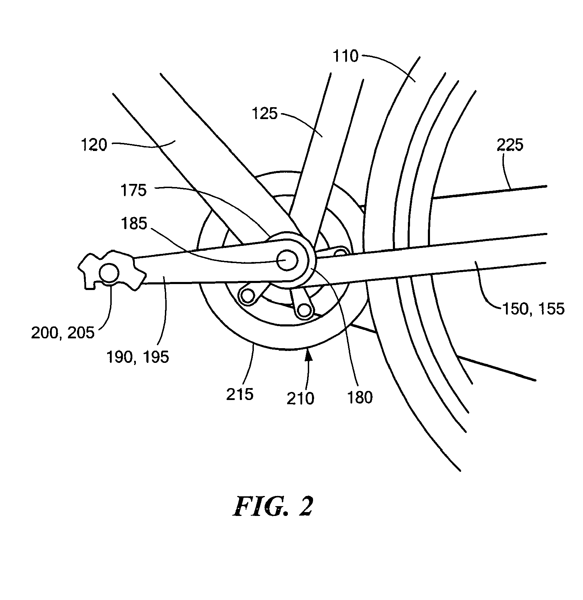

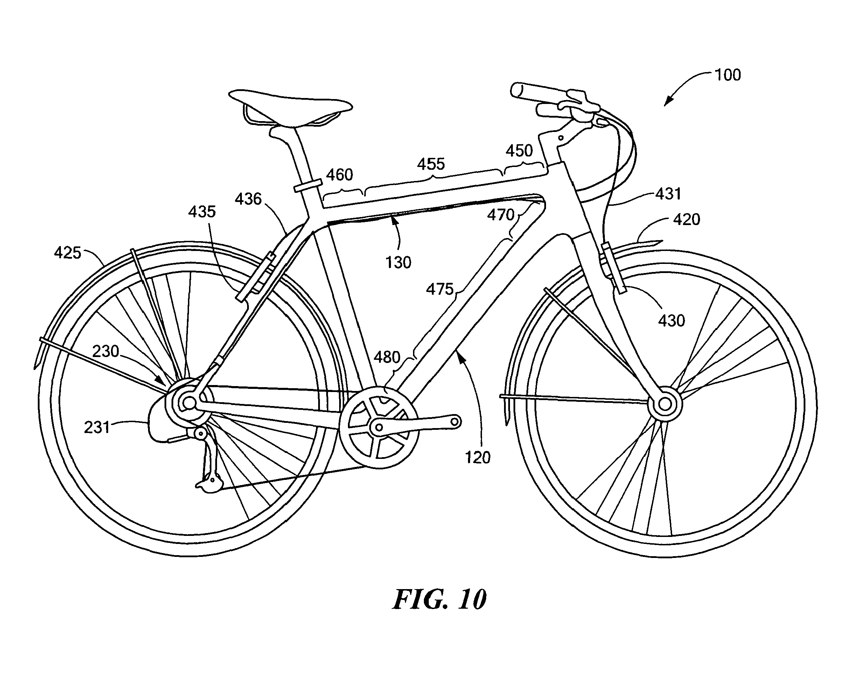

Referring now to Figure 2 in combination with Figure 1, a crank drive 175 is coupled to the frame 115 via a bottom bracket 180, and includes a spindle 185 that passes through the bottom bracket 180 to define a crank drive axis. A pair of crank arms 190, 195 (one on each side of the frame 115, with only one depicted in Figure 1) are operably connected to opposite ends of spindle 185 facing diametrically opposing directions. Pedals 200, 205 (one on each side of spindle 185, with only one depicted in Figure 1) are operably connected, respectively, to the distal ends of crank arms 190, 195. A wheel drive system 210 connects between the spindle 185 and the rear wheel 110 and includes a chain ring 215, a rear sprocket 220 and an interconnected drive chain 225. In an embodiment, the rear sprocket 220 of the wheel drive system 210 is one of several sprockets that form a variable-ratio transmission system known as derailleur gears 230 (best seen by referring to Figure 10).

The frame 115 may also be considered as being formed of a front frame section 240 and a rear frame section 250. In the embodiment of Figure 1, the front frame section 240 is composed of the down tube 120, the top tube 130, and the head tube 135, and the rear frame section 250 is composed of the seat tube 125, the seat stay tubes 140, 145, the chain stay tubes 150, 155, and the bottom bracket 180. The down tube 120 and the top tube 130 are rigidly coupled at respective first ends to the head tube 135; the seat stay tubes 140, 145 and the chain stay tubes 150, 155 are rigidly coupled at respective first ends at a region central to the rear wheel 110, forming a support thereat for the rear wheel axle 235; the seat stay tubes 140, 145 are rigidly coupled at a second end to the top of the seat tube 125; and, the chain stay tubes 150, 155 are rigidly coupled at a second end to the bottom bracket 180, which is rigidly coupled to the bottom of the seat tube 125. The down tube 120 and the top tube 130 are rigidly coupled at respective second ends to the bottom bracket 180 and the top of the seat tube 125, respectively, thereby rigidly connecting the front frame section 240 to the rear frame section 250.

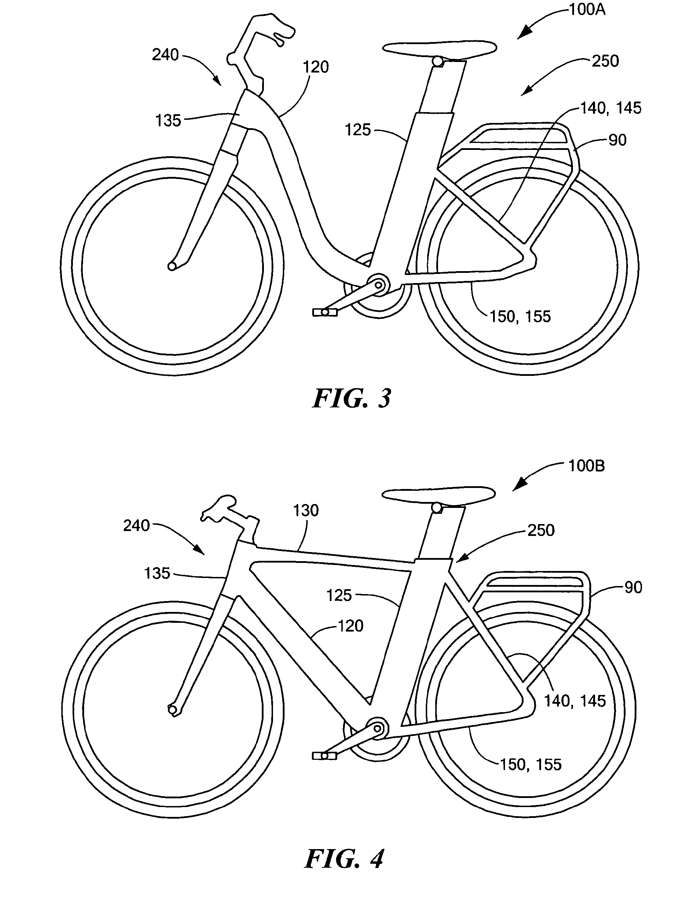

While embodiments of the invention are described herein having rigid frame connections, referred to in the art as a hard tail bicycle, it will be appreciated that the scope of the invention disclosed herein is not so limited, and also encompasses other bicycle frame arrangements that may include suspension systems, which may be partial suspension systems, front or rear, or full suspension systems, front and rear. And while reference is made to the bicycle 100 depicted in Figures 1 and 2 having certain frame members, such as down tube 120, seat tube 125, top tube 130, head tube 135, seat stay tubes 140, 145, and chain stay tubes 150, 155, for example, it will be appreciated that the scope of the invention disclosed herein is not so limited, and also encompasses other bicycle frame arrangements, which will now be described with reference to Figures 3-9.

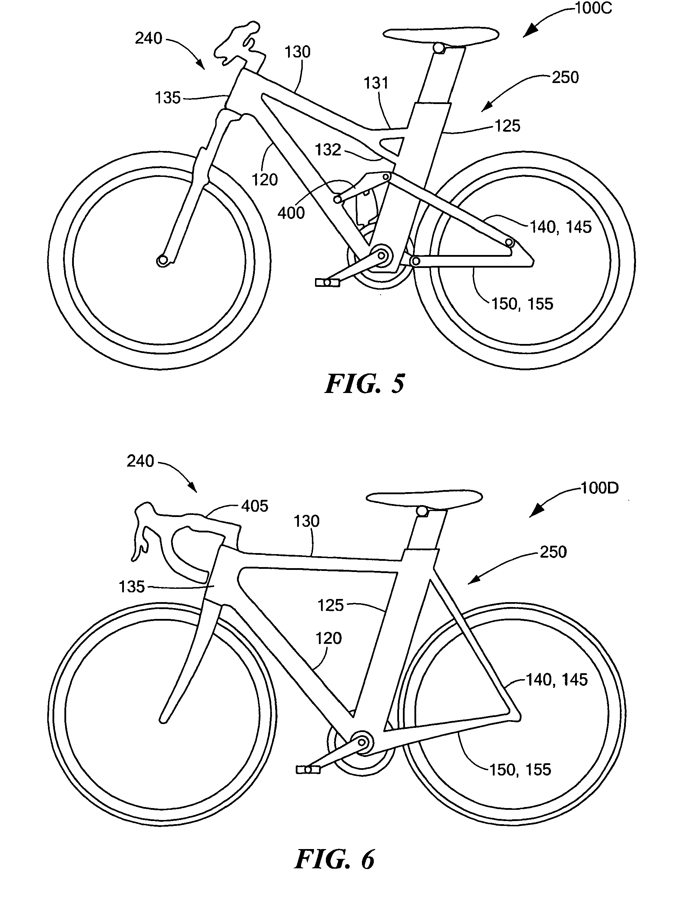

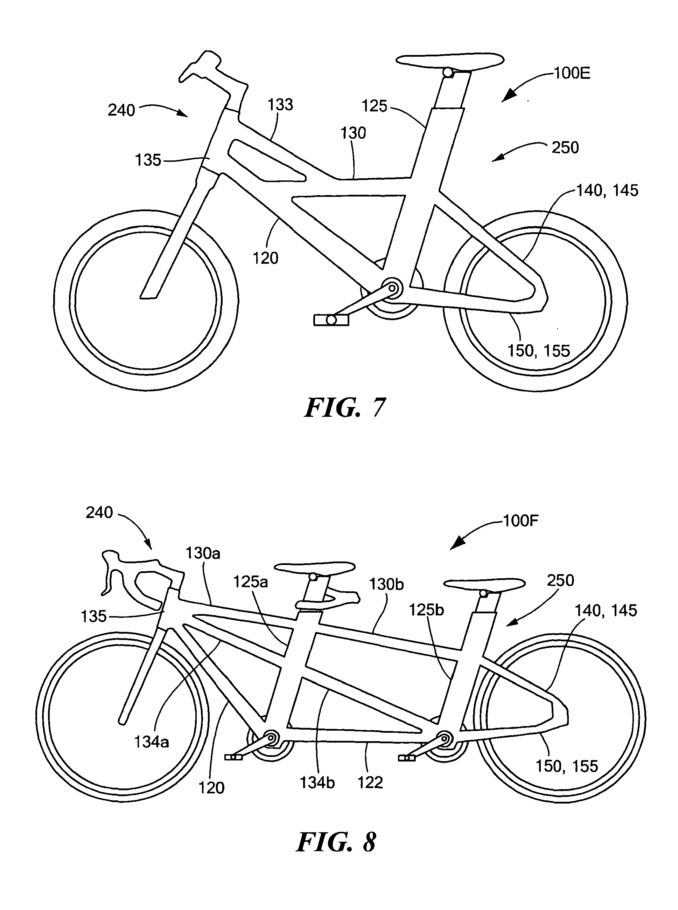

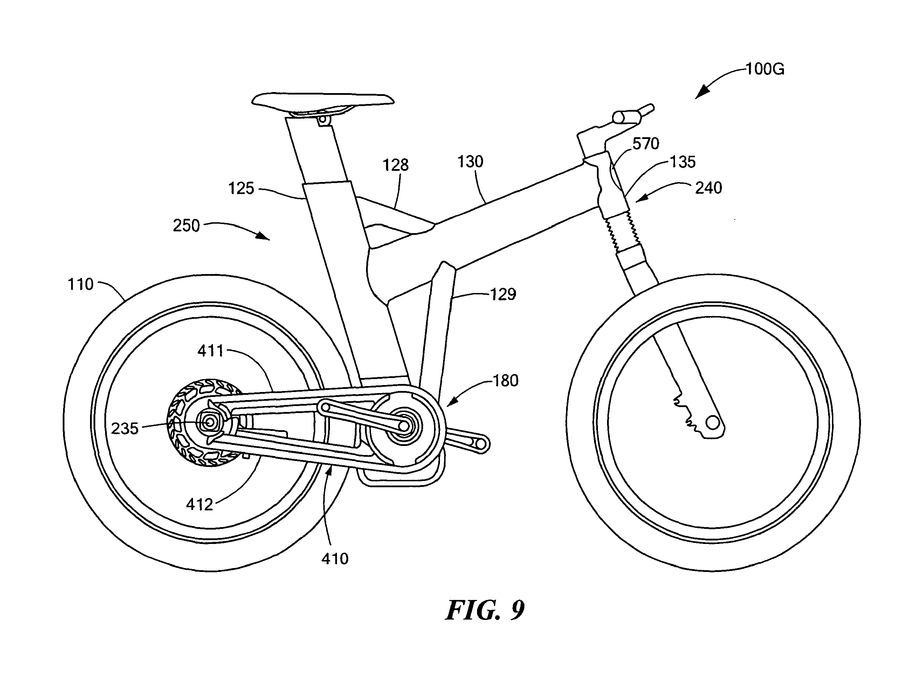

Figures 3-9 each depict a bicycle 100 (A, B, C, D, E, F and G) having a front frame section 240 and a rear frame section 250. In general, Figure 3 depicts a ladies style bicycle 100A with an accessory rack 90 formed using at least one tubular member, Figure 4 depicts a men's hard tail bicycle 100B with an accessory rack 90 (similar to that of Figure 1 absent the rack), Figure 5 depicts a suspension bicycle 100C having a suspension system 400, Figure 6 depicts a road bicycle 100D having road-style handlebars 405, Figure 7 depicts a compact city bike / folding bicycle 100E, Figure 8 depicts a tandem bicycle 100F, and Figure 9 depicts an electric-assist bicycle (e-bike) 100G.

In an embodiment, the accessory rack 90 is formed from a plurality of tubular members suitable for a purpose disclosed herein with respect to illumination of the tubular members, which will be discussed further below.

In Figure 3 (bicycle 100A), the front frame section 240 is composed of a down tube 120 and a head tube 135; and, the rear frame section 250 is composed of a seat tube 125, seat stay tubes 140, 145, and chain stay tubes 150, 155.

In Figure 4 (bicycle 100B), the front frame section 240 is composed of a down tube 120, a top tube 130 and a head tube 135; and, the rear frame section 250 is composed of a seat tube 125, seat stay tubes 140, 145, and chain stay tubes 150, 155.

In Figure 5 (bicycle 100C), the front frame section 240 is composed of a down tube 120, a top tube 130, a head tube 135 and top tube stays 131, 132; and, the rear frame section 250 is composed of a seat tube 125, seat stay tubes 140, 145, chain stay tubes 150, 155 and suspension system 400.

In Figure 6 (bicycle 100D), the front frame section 240 and rear frame section 250 are similar to that of Figures 1 and 4.

In Figure 7 (bicycle 100E), the front frame section 240 is composed of a down tube 120, a top tube 130, a head tube 135 and a top tube stay 133; and, the rear frame section 250 is composed of a seat tube 125, seat stay tubes 140, 145, and chain stay tubes 150, 155.

In Figure 8 (bicycle 100F), the front frame section 240 is composed of a head tube 135, a down tube 120, a first top tube 130a, a first intermediate tube 134a, a second top tube 130b, a second intermediate tube 134b, a bottom tube 122, and a first seat tube 125a; and, the rear frame section 250 is composed of a second seat tube 125b, seat stay tubes 140, 145, and chain stay tubes 150, 155.

In Figure 9 (bicycle 100G), the front frame section 240 is composed of a head tube 135, a top tube 130, a top tube upper stay 128, and a top tube lower stay 129; and, the rear frame section 250 is composed of a seat tube 125, and a cantilevered chain case 410. In the embodiment depicted in Figure 9, the cantilevered chain case 410 includes an upper tube member 411 and a lower tube member 412 coupled together at one end at the bottom bracket 180, and coupled together at an opposite end at an axis 235 of the rear wheel 110. In an embodiment, the cantilevered chain case 410 is coupled to the bottom bracket 180 with a torsional degree of freedom therebetween, and configured such that the cantilevered chain case 410 serves as a rear suspension member for the bicycle 100G.

The bicycle 100G depicted in Figure 9 is fully described in co-pending U.S. Application Serial No. 61/377,194, filed August 26, 2010, which is herein incorporated by reference in its entirety.

Referring now to Figure 10, bicycle 100 is depicted in right side view with like reference numerals used to indicate like features. In addition to those features depicted in Figure 1, Figure 10 also depicts a front fender 420 and a rear fender 425. Figure 10 also more clearly depicts front brakes 430, front brake cable 431, rear brakes 435, rear brake cable 436, and derailleur cable 231.

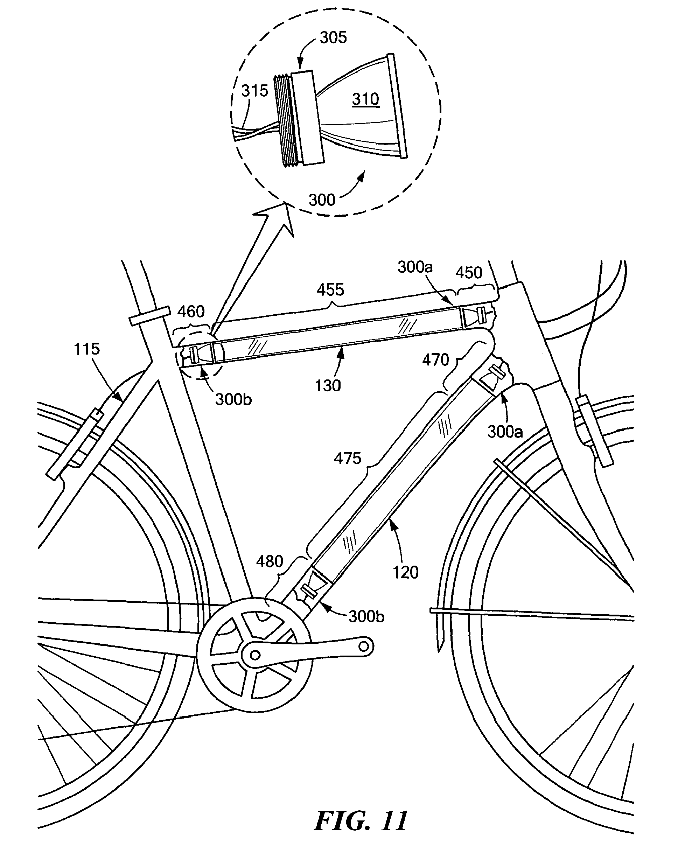

In Figure 10, the top tube 130 is depicted having a first end 450, a second end 460, and an intermediate section 455. Likewise, the down tube 120 is depicted having a first end 470, a second end 480, and an intermediate section 475. In general, each tube of the bicycle frame 115 (such as the down tube 120, seat tube 125, top tube 130, head tube 135, seat stay tubes 140, 145, chain stay tubes 150, 155, or any other frame tube disclosed herein, for example) may be viewed as having a first end, a second end, and an intermediate section. Thus, any discussion herein relating to a first end, a second end, or an intermediate section, with or without reference to a particular reference numeral, should be considered as being applicable to any tube capable of having the characteristics described herein, with reference now being made to Figure 11.

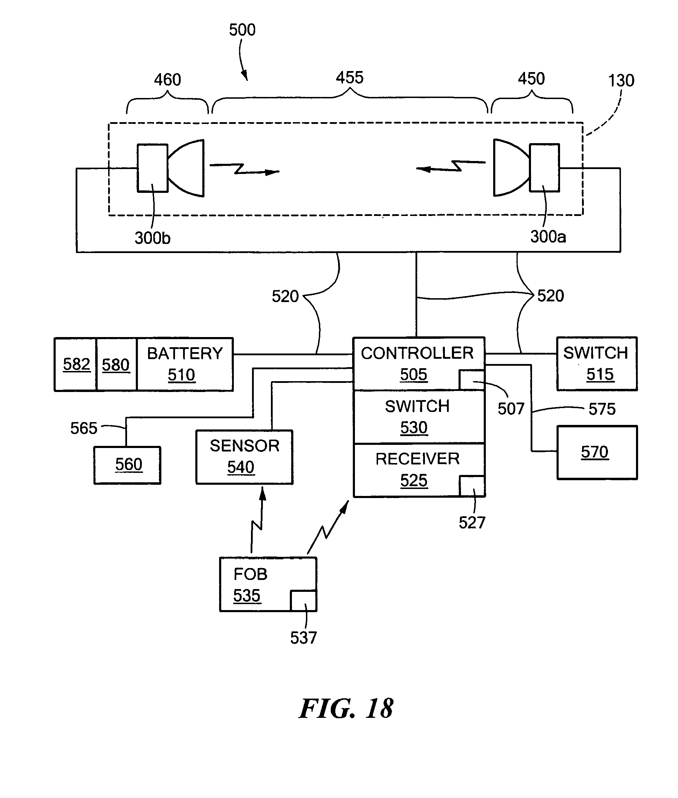

In Figure 11, bicycle frame 115 is depicted having a light source 300 composed of a light emitting diode (LED) module 305 and a reflector 310. An electrical wire 315 provides electrical power to the light source 300 from a power supply, such as a battery 510 (depicted in Figure 18) for example. The light source 300 is disposed inside a tube of the frame 115, such as but not limited to the down tube 120 or the top tube 130, for example, such that the inside of the respective tube is illuminated when the light source 300 is turned ON. In an embodiment, the intermediate sections 455 and 475 of down tube 120 and top tube 130 are made of a translucent material having an optical characteristic that permits light from the light source 300 to be transmitted through the translucent intermediate section 455, 475 when the light source 300 is turned ON, thereby making the illuminated frame 115 visible at night from a distance.

As depicted in Figure 11, an embodiment includes a first LED light source 300a disposed at a first end 450, 470 of a respective tube 130, 120, and a second LED light source 300b disposed at a second end 460, 480 of the respective tube 130, 120, with each LED light source 300a, 300b having a reflector 310 to direct the light along the length of the translucent intermediate section 455, 475 of the respective tube 130, 120.

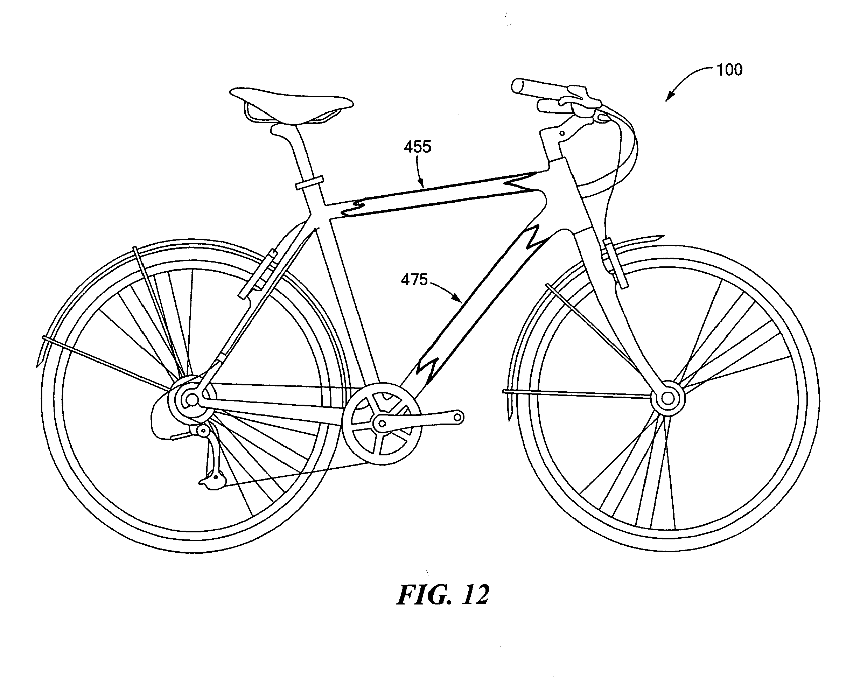

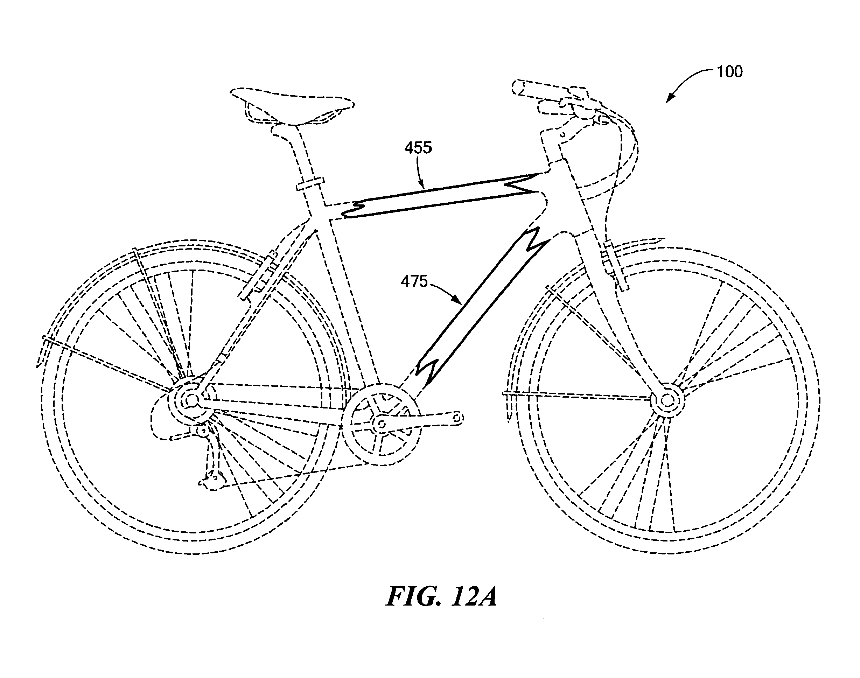

Figure 12 depicts the bicycle 100 of Figures 10 and 11 with intermediate sections 455 and 475 "lit up" when the light source 300 is turned ON. As used herein, the term "lit up" refers to the translucent intermediate sections 455, 475 being illuminated from the inside from light source 300, and transmitting light therethrough to the ambient environment outside of the respective tube 130, 120. With such illuminating structure, a bicycle rider will be more readily visible at night. Figure 12A depicts the same right side view of the bicycle 100 of Figure 12, but with some non-illuminated members of the bicycle and frame illustrated in dashed line form to provide context of illuminated sections 455, 475 relative to non-illuminated sections.

In an embodiment, the material used to form the translucent intermediate sections 455, 475 is composed of flax, hemp fibers, linen fibers, glass fiber (fiberglass), or any combination of flax, hemp fibers, linen fibers and/or glass fibers. A hardening resin such as epoxy for example is mixed with the respective flax, hemp fibers, linen fibers and/or glass fibers to provide the desired structural integrity for the respective tube 130, 120 as needed for the purposes disclosed herein. In an embodiment, the entire frame 115, or at least the tubes having translucent intermediate sections as herein described, are made from 100% organically derived material, and in another embodiment such frame and/or tubes are fully bio-degradable.

While embodiments are disclosed herein being made using certain translucent materials, it will be appreciated that the scope of the invention is not limited to only those materials listed above, which is a non-exhaustive list, but also encompasses any other material, natural or synthetic, that is at least partially translucent with respect to defined wavelengths of the electromagnetic spectrum, such as the visible light spectrum for example, for a thickness of material suitable for the purposes disclosed herein. Furthermore, the invention is not limited to a material being translucent to only the visible spectrum. Since the visible spectrum is only a portion of the electromagnetic spectrum that is visible to (can be detected by) the human eye, with such electromagnetic radiation in this range of wavelengths being called visible light, there are other ranges of wavelengths of the electromagnetic spectrum that may have utility when used to make a tubular member of a bicycle 100 that is translucent to those other ranges. For example, the electromagnetic spectrum also includes infrared wavelengths (infrared light), which are longer than the wavelengths of visible light. In an embodiment where a tubular member of the bicycle 100 is made using a material that is translucent to infrared wavelengths, it is contemplated that such a bicycle 100 would be more easily detected at night by automobiles employing active or passive night vision systems that are highly receptive to infrared light.

In an embodiment, the material used to form the translucent intermediate sections 455, 475, or any other translucent section of any other tubular member of the bicycle 100 in accordance with an embodiment of the invention disclosed herein, may be formed by a weave of dyed colored fibers to produce a pattern, such as plaid, pinstripe, or a combination of plaid an pinstripe, for example. With such a weave of colored fibers, only light having a color of the dyed fiber will be transmitted by the respective fiber, thereby enabling a change in the pattern presented by the illuminated tubular member depending on the color of light emitted by the light source 300, which in an embodiment is controlled by a controller 507 (discussed further below).

In an embodiment, the material used to form the first ends 450, 470 and the second ends 460, 480 of the top tube 130 and the down tube 120, respectively, are composed of flax, hemp fibers, linen fibers, glass fibers, carbon fibers, or any combination of flax, hemp fibers, linen fibers, glass fibers and/or carbon fibers. Likewise, a hardening resin such as epoxy for example is mixed with the respective flax, hemp fibers, linen fibers, glass fibers and/or carbon fibers to provide the desired structural integrity for the respective tube 130, 120 as needed for the purposes disclosed herein.

While embodiments are disclosed herein being made using a particular fiber material, it will be appreciated that other fiber materials may be employed, such as but not limited to; Kevlar®, Nomex®, or other aramids, Dynel®, boron, or similar polymers, synthetic, or natural materials having a strength-to-weight ratio, modulus of elasticity, density, elongation-at-yield, and optical transmission material properties suitable for the purposes disclosed herein.

During manufacturing of the frame 115, bladder molding processes may be employed where flax, hemp fibers, linen fibers and/or glass fibers are laid in place to form the translucent intermediate sections, and flax, hemp fibers, linen fibers, glass fibers and/or carbon fibers are laid in place to form the first and second ends, which are in turn integrally formed with other first and second ends of adjacently joined tube sections of the frame 115, thereby forming one integrally formed unitary frame 115. For example, top tube 130 is integrally joined at its ends with head tube 135 and seat tube 125, seat tube 125 is integrally joined at its ends with top tube 130 and bottom bracket 180, down tube 120 is integrally joined at its ends with head tube 135 and bottom bracket 180, and head tube 135 is integrally joined at its ends with top tube 130 and down tube 120. As used herein, the term integrally formed unitary frame refers to a frame having structural joints formed by intermingled curable material, as opposed to joints that are clamped or bolted together.

In an embodiment, the weight percentage glass content of the frame 115 is equal to or less than 10% of the total weight of the frame 115.

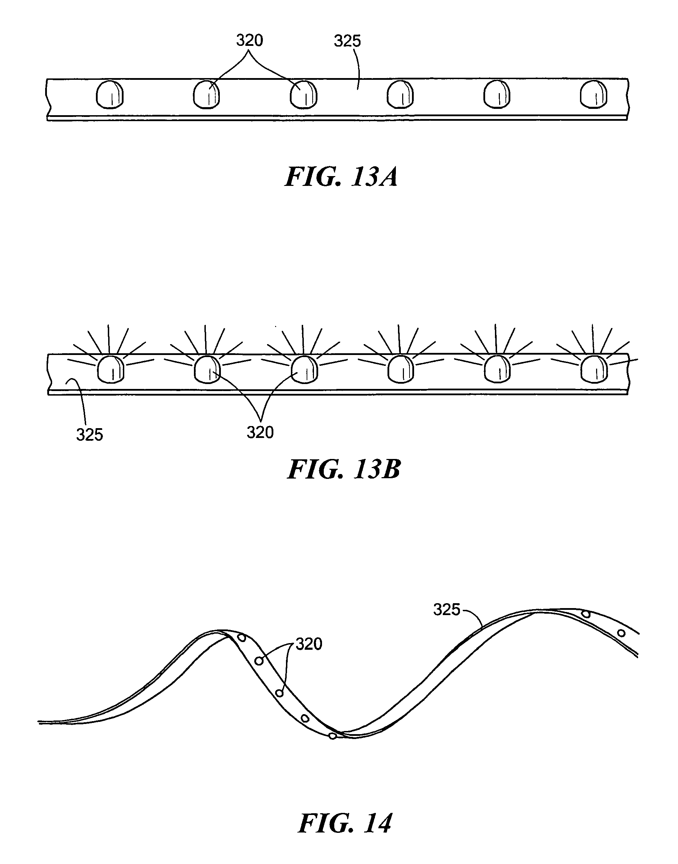

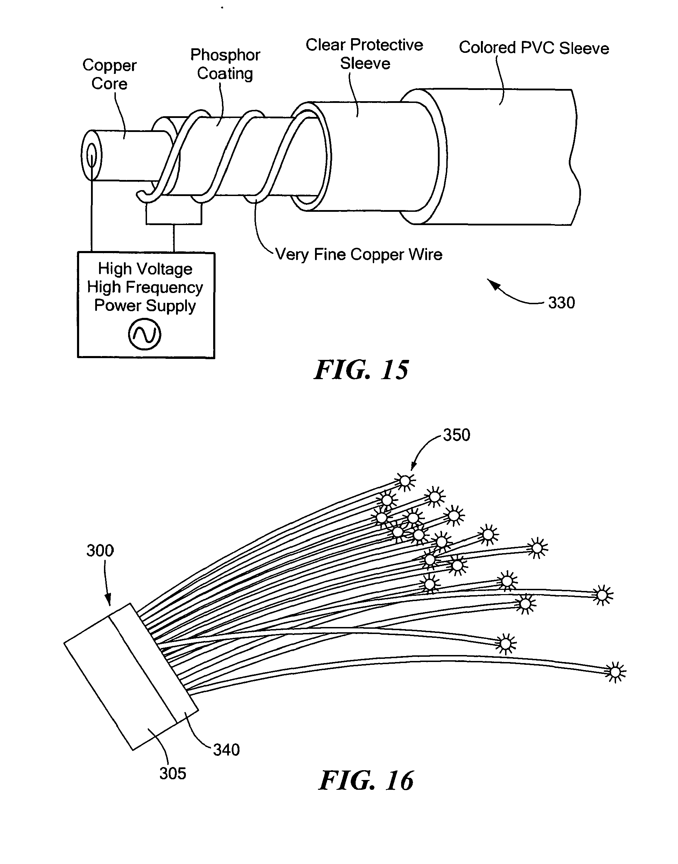

While embodiments have been described having a discrete light source 300 in the form of an LED module 305, it will be appreciated that the scope of the invention is not so limited, and also encompasses other light sources, discrete or distributed, such as incandescent light bulbs, electroluminescent wire, a cold cathode tube, a tritium illumination substrate, organic LEDs (OLEDs), or a combination of any of the foregoing light sources. Figures 13A, B and 14 depict a plurality of LEDs 320 distributed along a substrate 325, which may be rigid (Figure 13A OFF, Figure 13B ON) or flexible (Figure 14), and Figure 15 depicts an electroluminescent (EL) wire 330. In an embodiment, the substrate 325 and/or the EL wire 330 is disposed inside the tube of the frame 115 along the length of the translucent intermediate section 455, 475.

Alternatively, and with reference now to Figure 16, light source 300 may be an LED module 305 coupled to a bundle of fiber optic cables 350 via an optical coupler 340, which in an embodiment may be a combination of lenses and reflectors for concentrating the light from LED module 305 into each fiber optic cable 350. In an embodiment, each fiber optic cable 350 has a different length for distributing the emitted light inside the tube of the frame 115 along the length of the translucent intermediate section 455, 475. While reference is made herein to fiber optic cables as one means of transporting light from a light source to a location distant from the light source, it will be appreciated that embodiments of the invention are not limited to fiber optic cables per se, but also encompass any type of light pipe suitable for the purposes disclosed herein.

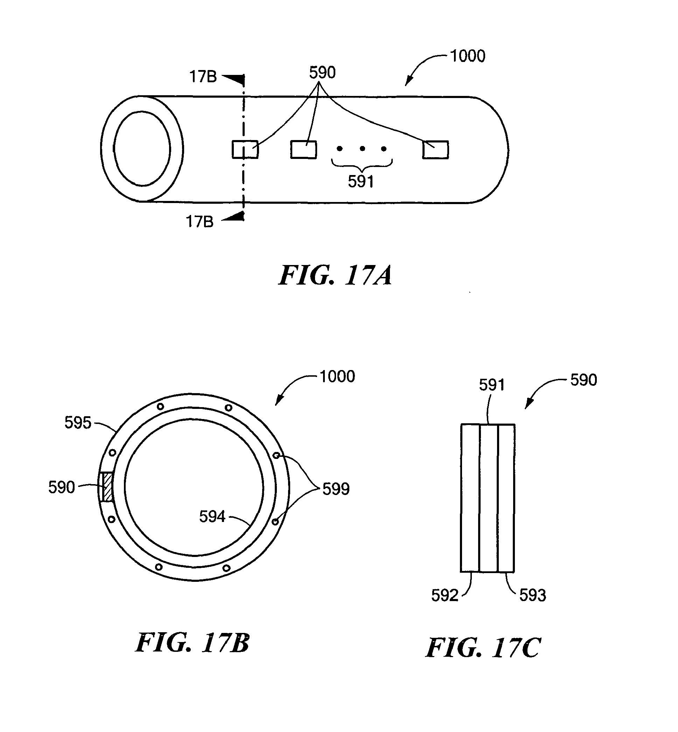

With reference now to Figures 17A, B and C, an embodiment of a tubular member 1000 is depicted having OLEDs 590, which are LEDs in which the emissive electroluminescent layer 591 is a film of organic compounds that emit light in response to an electric current, the electroluminescent layer 591 is disposed between two electrodes 592, 593 where at least one of the electrodes 592 is transparent and arranged outwardly facing as part of the translucent material of the tubular member 1000 having controlled illumination as disclosed herein. In an embodiment, the OLED's are disposed in an outer skin 595 of the tubular member 1000, the inner portion 594 of the tubular member 1000 providing a means for electrically connecting the electrodes 592, 593 with a power supply 510, 580, 582 (see Figure 18, discussed further below). The ellipses 591, 599 represent an arrangement of OLED's 590 that can be distributed in any quantity along a length of the tubular member 1000 (represented by reference numeral 591), and in any quantity around a circumference of the tubular member 1000 (represented by reference numeral 599). Alternatively, OLED's 590 may be arranged in a similar manner as the LED's 320 discussed above,

It should be noted that embodiments of the invention disclosed herein relate to any tubular member that makes up a part of the bicycle 100, including any accessories that may be attached to the bicycle 100. As such, reference numeral 1000 is intended herein to apply to any tubular member that makes up a part of the bicycle including any accessory attached to the bicycle 100.

Referring now to Figure 18, a one-line block diagram schematic 500 of a light source arrangement and control scheme in accordance with an embodiment of the invention is depicted having a first light source 300a disposed within a top tube 130 at a first non-translucent end 450 of the tube, and a second light source 300b disposed within the same top tube 130 at a second non-translucent end 460, where the two light sources 300a, 300b face each other and direct light towards the translucent intermediate section 455 of the tube. In an embodiment, a microprocessor controller 505 is in operable communication with the two light sources 300a, 300b, a battery 510 and a switch 515 via signal lines 520, which in an embodiment are electrical wires. The controller 505, battery 510 and switch 515 may be disposed out of view inside one of the tubes of the frame 115, or may be disposed on an exterior surface of the frame 115, or anywhere else on the bike 100 that is convenient and suitable for the purposes disclosed herein. The battery 510 may be a standalone DC (direct current) power supply dedicated for providing electrical power to the light sources 300a, 300b, or may be a central power supply used for other purposes, such as a power supply used on the e-bike 100G of Figure 9 for example. In an embodiment, the controller 505 and the battery 510 are disposed out of view, and the switch 515 is disposed at the handle bar 160 in a convenient location for a rider to access for turning the light sources 300a, 300b ON and OFF (depress once to turn ON, depress again to turn OFF, for example).

In an alternative embodiment, power for the light source arrangement 500 is provided by a generator 580 operably disposed on the bicycle 100 in any location suitable for producing electrical power via operation of the bicycle. Example locations of where the generator 580 can be located include a hub disposed at the rear axle to receive rotational energy from the rear wheel, a hub disposed at the front axle to receive rotational energy from the front wheel, a hub disposed at the crank to receive rotational energy from the crank, a mount disposed proximate the rim and/or tire of the rear wheel to receive rotational energy from the rear tire, or a mount disposed proximate the rim and/or tire of the front wheel to receive rotational energy from the front tire, for example. The rotational energy produced by the respective part of a moving bicycle 100 is converted to electrical energy by the generator 580, which can then be used by the light source arrangement 500. In an embodiment, both a battery 510 and a generator 580 are employed.

In a further alternative embodiment, power for the light source arrangement 500 is provided by a solar cell or a plurality of solar cells 582 operably disposed on the bicycle 100 in any location suitable for producing electrical power from solar energy, such as any physical location on the bicycle 100 where the solar cells 582 would have exposure to the sun. In an embodiment, the solar cells 582 can be integrated into one or more tubular members under an outer clear coat layer of a non-translucent section of the tubular member in an upward facing direction. In an embodiment, the solar cells 582 could charge an integrated lithium polymer energy storage cell (referred to generally via reference numeral 510), or any comparable thin formable energy storage device, which would be used to power the intrinsic light source 300. It is contemplated that use of solar cells 582 co-molded with OLED's 590 would provide essentially an autonomous solid state power system. In an embodiment, any combination of one or more of a battery (energy storage device) 510, a generator 580, and a solar cell 582, may be employed.

In another embodiment, the controller 505 includes a signal receiving unit 525 and an internal switch 530, such as an electronic switch, a magnetic switch, a read switch, or a Hall effect switch for example, which are used for remotely turning the light sources 300a, 300b ON and OFF. For example, in an embodiment a user can operate the light sources 300a, 300b by pressing an electronic key fob 535 that sends a signal to controller 505 via the signal receiving unit 525, which in turn actuates the internal switch 530 to turn the light sources 300a, 300b ON. By utilizing an electronic key fob 535, a rider who is approaching a number of parked bicycles at night can easily find his/her bicycle by turning ON the light sources 300a, 300b to illuminate the frame 115. By pressing the electronic key fob 535 again the user is able to turn the light sources 300a, 300b OFF. Alternatively, the key fob 535 may be configured to interact magnetically with a magnetic switch (magnetically-actuated switch) 530, where waving the key fob 535 close to the switch 530 turns the light sources 300a, 300b ON, and waving the key fob 535 again close to the switch 530 turns the light sources 300a, 300b OFF. In this manner, the key fob 535 acts as an active toggle device to toggle the light sources 300a, 300b ON and OFF. In an embodiment employing a magnetic switch 530, a separate signal receiving unit 525 may not be required as the magnetic switch 530 may be configured to receive a magnetic signal directly from the key fob 535. While embodiments are disclosed herein employing light sources 300a, 300b, it will be appreciated that the scope of the invention is not limited to just light sources 300a, 300b, but also includes any light source 300 disclosed herein or considered suitable for a purpose disclosed herein.

In another embodiment, the receiving unit 525 includes a radio frequency (RF) receiver 527, and the FOB 535 includes a RF emitter 537. Alternatively, the FOB 535 itself can be the RF emitter 537. The RF emitter 537 and RF receiver 527 are properly matched so that a sufficiently strong signal sent by the RF emitter 537 is recognized by the RF receiver 527 in such a manner as to enable the controller 505 to turn the light sources 300a, 300b ON and OFF, depending on the signal strength received at the RF receiver 527 from the RF emitter 537. That is, a strong signal strength received at the RF receiver 527 would be representative of a user being within an operational distance of the bicycle 100 and desirous of the light sources 300a, 300b being turned ON, and a weak signal strength received at the RF receiver 527 would be representative of a user being outside of an operational distance of the bicycle 100 and desirous of the light sources 300a, 300b being turned OFF.

In another embodiment, a sensor 540 is disposed on the bicycle 100 in signal communication with the controller 505, and is disposed in a convenient location for communicating with a passive key fob 535. In an embodiment, the sensor 540 is disposed inside the frame 115 of the bicycle 100. The sensor 540 is configured as a detection sensor to detect the presence of the passive key fob 535, which in turn facilitates illumination of the frame 115 by way of the sensor 540 sending a signal to the controller 505 upon such detection. The controller 505 then in turn actuates the internal switch 530 as discussed above to illuminate the frame 115. With a passive key fob 535, the key fob 535 may be programmed to operate at a longer range, such as 5-10 feet for example, than an active key fob. Here, the bicycle frame 115 illuminates whenever the key fob 535 is within the defined range. As long as the key fob 535 is within this defined range, the bicycle frame 115 stays illuminated. As soon as the key fob 535 is outside of this defined range, such as when the rider walks away from the bicycle 100, the light sources 300a, 300b turn OFF automatically. In an embodiment, the sensor 540 is an RF receiver, thereby serving as an alternative means of controlling the lights 300a, 300b to that discussed above where the RF receiver 527 was arranged with the receiver 525. In an embodiment, switch 515 may be configured and used as a main or master switch that enables the rider to override the turning ON of the light sources 300a, 300b when the passive key fob 535 is within the defined range, thereby allowing a rider to turn the frame illumination OFF in order to save battery power when riding in the daytime.

While Figure 18 does not depict all electrical connections described herein, as it is depicted in one-line diagram form, one skilled in the art will readily appreciate how to make the necessary electrical connections in order to carry out the desired functions by simply referring to the written description and illustration provided herein relating to those functions.

In view of the foregoing, it will be appreciated that controller 505 is responsive to switches and/or signals, and is responsive to executable instructions which when executed by the controller performs the function of turning one or more light sources ON and OFF.

An example of executable instructions for controlling the illumination of the frame 115 is depicted in flowchart form in Figure 18. Here, a control process 600 starts at block 605 and proceeds to block 610 where it is determined if the key fob 535 is in range (passive system), or if the key fob 535 has been activated (active system). If the key fob 535 is in range or activated (as used herein, the term activated refers to physically pressing the key fob, physically waving the key fob close to the switch 530, or purposefully interacting in any other way with the key fob for the purposes disclosed herein), then control logic passes to block 615, where it is determined if the main switch 515 is turned ON. If the main switch 515 is turned ON, then control logic passes to block 620, where the controller 505 facilitates steps to illuminate the frame 115 by turning light sources 300a, 300b ON. Alternatively, in an embodiment not employing a main switch 515, or where the switch 515 does not function as an intervening main switch, then control logic passes from block 610 directly to block 620 along path 625 illustrated as a dashed line. When the frame 115 is illuminated, the controller 505 awaits a new signal from the key fob 535. That is, at block 630 it is determined if the key fob 535 is out of range (passive system), or if the key fob 535 has been again-activated or de-activated (active system). If the key fob 535 is still in range or still activated, then control logic stays at block 620 where the frame 115 remains illuminated. However, if the key fob 535 is out of range or has been de-activated, then control logic passes to block 635, where the light sources 300a, 300b are turned OFF. Control logic then passes back to block 610, where the controller 505 awaits another signal to initiate another illumination action. When control logic is at block 610, if the key fob 535 remains out of range or de-activated, then control logic stays in the loop between block 640 and 610 until another signal is received to initiate another illumination action.

While process 600 of Figure 18 illustrates specific process steps with specific actions, it will be appreciated that variations of this process may be employed without departing from the scope of the invention disclosed herein. All such variations are contemplated and are considered to fall with the ambit of the invention disclosed herein.

In an embodiment, the translucent intermediate section 455, 475 circumscribes the entire perimeter of the tube 130, 120, such that any light being emitted from the tube 130, 120 is visible from both sides of the bicycle 100. In an embodiment, a top portion of the tube 130, 120 may be made non-translucent so as not to distract the rider when riding at night with the frame 115 illuminated.

Other embodiments may utilize an illuminated frame 115 in other ways, such as by highlighting a design logo, or by providing navigational information such as red lighting on the left side of the bicycle frame 115 and green lighting on the right side, for example. Other uses for an illuminated bicycle frame 115 are contemplated and considered within the scope of the invention disclosed herein. For example, blue illumination may be used to identify police bikes, red to identify paramedic bikes, and green to identify local guide bikes. Such color designations will provide ease of identification in urban environments where streets may be crowded with many bicycles.

With respect to official or service-related bikes (police, paramedics and guides for example), controller 505 may be programmed to be responsive to executable instructions which when executed by the controller cause the light sources 300a, 300b to flash ON and OFF when switch 515 is actuated twice in succession (actuate twice in succession to turn flashing ON, actuate twice in succession again to turn flashing OFF, for example), thereby enabling the rider of the service bike to inform others that he/she is on official duty so that clear passage can be provided to the rider. Alternative to a dual-function switch 515 (actuate once to turn lights ON and OFF, actuate twice in succession to turn flashing lights ON and OFF), a separate switch (not shown) may be employed to manage the function of turning flashing lights ON and OFF.

In view of all of the foregoing description, it will be appreciated that embodiments of the invention include a number of different arrangements for illuminating a tubular member 1000 of a bicycle 100, which in a broad sense includes a bicycle 100 having at least one tube in the form of a seat tube 125, a down tube 120, a top tube 130, a head tube 135, a seat stay tube 140, 145, a chain stay tube 150, 155, a seat post 172, a fork member 165, a lefty member 165, a righty member 165, a suspension member 400, 410, a handlebar 160, a crank arm 190, 195, a wheel rim 107, 112, or an accessory member 90, and a light source 300 disposed relative to the at least one tube that includes a translucent section 455 having an optical characteristic that permits light transmission therethrough from the light source 300. In an embodiment, the light source 300 is intrinsically arranged with the aforementioned at least one tube.

In view of all of the foregoing, it will be further appreciated that embodiments of the invention include a number of different variations of the particular embodiments described above.

For example, in an embodiment the sensor 540 is configured and disposed to detect certain ambient environmental conditions, such as air temperature, air pressure, humidity level, pollen count, or ultraviolet light intensity (alternatively referred to as UV index), for example, and the controller 505 is programmed to respond to a signal from the sensor to change an operational condition of the light source 300 based on one of the several environmental conditions. For example, if the outside temperature drops below a defined temperature, such as 2-degree Celcius for example, the sensor 540 would provide a signal to the controller 505 which would then facilitate a change in color emitted from the light source 300 from a first color such as orange for example to a second color such as blue for example. With such a color change, a rider would be made aware of a change in temperature while riding and could take precautionary measures since the road surface may become icy. While a change in color is one option for indicating a change in an environmental condition, the invention is not so limited and also encompasses other ways of changing an operational condition of the light source 300, such as changing the pulse rate of the light emitted, or changing the pattern of the light emitted, for example. Using a similar approach as just described: a rider having notice of an increase in the UV index could take precautionary measures to avoid sunburn while riding; a rider having notice of a high pollen count or a high humidity level could decide to reduce the level of exertion during the ride; and, a rider having notice of a reduction in ambient pressure could take precautionary measures to avoid being caught outside in a storm while riding.

In another embodiment, the sensor 540 is a moisture sensor or a heart rate sensor and is disposed on the handlebars 160 in such a manner as to sense the perspiration level or the heart rate of the rider. A rider having notice of excessive perspiring or an excessive heart rate, via a change in an operational condition of the light source 300 as described above, could decide to reduce the level of exertion during the ride.

In another embodiment, the sensor 540 is an air pressure sensor and is diposed in signal communication with the pressurized air inside one or both of the tires 105, 110. A rider having notice of low tire pressure could take precautionary measures to adjust the tire pressure as needed.

In another embodiment, the sensor 540 is configured to sense pedaling cadence or steering angle. A rider having notice of a change from slow cadence and reserved steering, to fast cadence and rapid steering, could take this as a sign of fatigue arising from excessive exertion and take precautionary measures to avoid an accident.

In another embodiment, the controller 505 is configured to run, via executable instructions, a startup protocol each time the controller 505 is energized, which in an embodiment would include a system check by the controller 505 of components arranged in signal communication with the controller 505. On completion of the startup protocol, the controller would operate the light source 300 in such a manner (color change, pulsing illumination, light pattern change, for example) as to provide the rider with notice of a healthy bicycle system check, or not, indicating that the bicycle is suitable to ride, or not, depending on whether or not all systems check out as healthy, that is, in a condition suitable for proper operation.

In another embodiment, the bicycle 100 is equipped with a camera 560 (see Figures 1 and 17) disposed on the handlebars 160, or anywhere else on the bicycle 100 that would be suitable for a purpose disclosed herein, and in signal communication via communication line 565 with the controller 505. When actuated, which could be manually by a pushbutton on the camera 560, or via the controller 505 when the bicycle 100 is first pedaled by a rider, the camera 560 sends a picture of the rider and/or rider's clothing to the controller 505, which is configured via executable instructions to analyze the colors and/or patterns of the rider's clothing. The controller 505 then controls the light source 300 to change the color and/or pattern of the emitted light to match the color and/or pattern of the rider's clothing. By causing at least one tubular member of the bicycle to illuminate with a color and/or pattern substantially similar to the rider's clothing, it is contemplated that a safer riding condition will be created as the rider plus bicycle would now present a more uniform vision to other traffic on the road.

In another embodiment, the bicycle 100 is equipped with a camera obscura 570 (see Figures 9 and 17) disposed on the head tube 135, or anywhere else on the bicycle 100 that would be suitable for a purpose disclosed herein, and in signal communication with the controller 505 via an optical transmission path 575, such as one or more fiber optic cables for example. When actuated, which could be manually by a pushbutton on the camera obscura 570, via the controller 505 when the bicycle 100 is first pedaled by a rider, or in real time when the bicycle 100 is in use, the camera obscura 570 sends an image of the bicycle's surroundings to the controller 505, which is configured via executable instructions to analyze the image. The controller 505 then controls the light source 300 to change the color and/or pattern of the emitted light to match the colors and/or patterns of the image of the bicycle's surroundings, or alternatively to produce imagery on the tubular member that matches the image captured by the camera obscura 570. By causing at least one tubular member of the bicycle to illuminate with imagery that replicates a surrounding image, it is contemplated that police or other law enforcement officers will be able to achieve near-stealth riding conditions that could assist in masking their presence when in pursuit of a perpetrator via the bicycle 100.

While certain combinations of features relating to a bicycle have been described herein, it will be appreciated that these certain combinations are for illustration purposes only and that any combination of any of these features may be employed, explicitly or equivalently, either individually or in combination with any other of the features disclosed herein, in any combination, and all in accordance with an embodiment of the invention. Any and all such combinations are contemplated herein and are considered within the scope of the invention disclosed.

An embodiment of the invention may be embodied in the form of computer-implemented processes and apparatuses for practicing those processes. The present invention may also be embodied in the form of a computer program product having computer program code containing instructions embodied in tangible media, such as floppy diskettes, CD-ROMs, hard drives, USB (universal serial bus) drives, or any other computer readable storage medium, such as random access memory (RAM), read only memory (ROM), erasable programmable read only memory (EPROM), electrically erasable programmable read only memory (EEPROM), or flash memory, for example, wherein, when the computer program code is loaded into and executed by a computer, the computer becomes an apparatus for practicing the invention. The present invention may also be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein when the computer program code is loaded into and executed by a computer, the computer becomes an apparatus for practicing the invention. When implemented on a general-purpose microprocessor, the computer program code segments configure the microprocessor to create specific logic circuits. A technical effect of the executable instructions is to remotely operate a light source within a frame of a bicycle to illuminate the bicycle frame from a distance for any reason including reasons relating to safety, identification and/or navigation.

As disclosed, some embodiments of the invention may include some of the following advantages: illumination of a bicycle frame for safety, identification and/or navigation purposes; use of flax for providing a translucent section of a bicycle frame, where the flax has a specific modulus (strength to weight ratio) greater than steel, a modulus of elasticity (stiffness) greater than glass fibers, and a density less than carbon fibers; use of flax that has an elongation at yield that is very similar to that of carbon and glass fibers, thereby allowing for stiffness in structures when appropriate fiber orientation and ply geometry are taken into account in the design and fabrication phase; use of flax having material characteristics that allow for hybrid composite designs combining multiple types of materials in the same structural element; use of flax that has a low coefficient of thermal expansion, similar to carbon fiber, which is advantages (dimensional stability during curing) for use in molding processes that employ heat; use of flax that has a phonic insulation material property greater than glass or carbon fiber, thereby giving it a superior ability to absorb and dampen vibration; and, use of flax that is 100% natural, organic and recyclable, thereby easing the carbon footprint from bicycles on the environment.

In view of the foregoing, it will be appreciated that the particular and innovative arrangement of components according to the invention affords numerous not insignificant technical advantages that can serve to enhance the safety of operation of a bicycle.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best or only mode contemplated for carrying out this invention, but that the invention will include all embodiments falling within the scope of the appended claims. Also, in the drawings and the description, there have been disclosed exemplary embodiments of the invention and, although specific terms may have been employed, they are unless otherwise stated used in a generic and descriptive sense only and not for purposes of limitation, the scope of the invention therefore not being so limited. Moreover, the use of the terms first, second, etc. do not denote any order or importance, but rather the terms first, second, etc. are used to distinguish one element from another. Furthermore, the use of the terms a, an, etc. do not denote a limitation of quantity, but rather denote the presence of at least one of the referenced item.

## Claims

1. A bicycle, comprising:
at least one tubular member comprising a translucent section; and
a light source disposed relative to the at least one tubular member such that light transmission from the light source is permitted to pass from a region intrinsic to the at least one tubular member to a region remote from the bicycle, wherein the translucent section comprises an optical characteristic that permits the light transmission;
wherein the at least one tubular member comprises a seat tube, a down tube, a top tube, a head tube, a seat stay tube, a chain stay tube, a seat post, a fork member, a lefty member, a suspension member, a handlebar, a crank arm, a wheel rim, or an accessory member.

2. The bicycle of Claim 1, wherein:
the at least one tubular member comprises a first end and a second end, the translucent section being disposed therebetween, the first end and the second end being non-translucent.

3. The bicycle of Claim 1, wherein:
the translucent section is translucent around an entire perimeter of the at least one tubular member.

4. The bicycle of Claim 1, wherein:
the light source comprises a discrete light source, a distributed light source, or a combination of a discrete light source and a distributed light source.

5. The bicycle of Claim 3, wherein the discrete light source comprises an incandescent bulb, a light emitting diode, an organic light emitting diode, or a combination of an incandescent bulb, a light emitting diode, and an organic light emitting diode.

6. The bicycle of Claim 3, wherein the distributed light source comprises an electroluminescent wire, a cold cathode tube, a tritium illumination substrate, or a combination comprising at least two of an electroluminescent wire, a cold cathode tube, and a tritium illumination substrate.

7. The bicycle of Claim 1, further comprising a light guide disposed within the at least one tubular member.

8. The bicycle of Claim 7, wherein the light guide comprises a reflector disposed proximate the light source to direct light from the light source along a length of the translucent section.

9. The bicycle of Claim 7, wherein the light guide comprises a fiber optic cable or light pipe having one end disposed proximate the light source, and another end disposed a distance from the light source along a length of the translucent section.

10. The bicycle of Claim 9, wherein the fiber optic cable or light pipe is one of several fiber optic cables or light pipes, respectively, each one of the several having its respective one end disposed proximate the light source, and each one of the several having a different length within the translucent section.

11. The bicycle of Claim 5, wherein the light emitting diode is one of a plurality of light emitting diodes forming a light strip disposed along a length of the translucent section.

12. The bicycle of Claim 5, wherein the organic light emitting diode is one of a plurality of organic light emitting diodes formed with a wall thickness of the at least one tubular member.

13. The bicycle of Claim 1, wherein:
the light source is mounted within the at least one tubular member at one of the first end and the second end.

14. The bicycle of Claim 1, wherein:
the light source comprises a first light source mounted within the at least one tubular member at the first end, and a second light source mounted within a same one of the at least one tubular member at the second end, the first light source being disposed to direct light toward the second light source, and the second light source being disposed to direct light toward the first light source.

15. The bicycle of Claim 1, further comprising:
a switch disposed in electrical communication with the light source.

16. The bicycle of Claim 15, wherein the switch is disposed within the at least one tubular member.

17. The bicycle of Claim 15, further comprising:
a controller disposed in electrical communication with the switch, the controller being responsive to a control signal to actuate the switch to turn ON the light source.

18. The bicycle of Claim 17, wherein:
the controller is responsive to a remote control device productive of the control signal received at the controller to actuate the switch to turn ON the light source.

19. The bicycle of Claim 17, wherein the remote control device comprises an electronic key fob.

20. The bicycle of Claim 17, wherein:
the handlebar is disposed in operable communication with the head tube;
wherein the switch is disposed at the handlebar.

21. The bicycle of Claim 15, further comprising:
a power source disposed in electrical communication with the switch and the light source.

22. The bicycle of Claim 1, wherein the at least one tubular member comprises flax, hemp fibers, linen fibers, glass fibers, carbon fibers, or any combination of flax, hemp fibers, linen fibers, glass fibers, and carbon fibers.

23. The bicycle of Claim 2, wherein the translucent section of the at least onetubular member comprises flax, hemp fibers, linen fibers, glass fibers, or any combination of flax, hemp fibers, linen fibers, and glass fibers preferably wherein the first end and the second end each comprise flax, hemp fibers, linen fibers, glass fibers, carbon fibers, or any combination of flax, hemp fibers, linen fibers, glass fibers, and carbon fibers.

24. The bicycle of Claim 1, wherein the at least one tubular member comprises a seat tube, a head tube, and at least one of a down tube and a top tube operably connected between the head tube and the seat tube, and further comprising:
a steerer member operably connected with the head tube, wherein the handlebar is operably connected with the steerer member;
a rear frame member operably connected with the seat tube;
a bottom bracket disposed at a bottom end of the seat tube;
a seat disposed at a top end of the seat tube;
a front wheel operably connected with the steerer member;
a rear wheel operably connected with the rear frame member;
a crank assembly operably connected with the bottom bracket; and
a drive member operably connected between the crank assembly and the rear wheel.

25. The bicycle of Claim 24, wherein:
the rear frame member comprises a pair of the seat stay tubes, and a pair of the chain stay tubes, each pair of tubes being operably connected between the seat tube and the rear wheel.

26. The bicycle of Claim 24, wherein:
The rear frame member comprises a cantilevered chaincase operably connected between the bottom bracket and the rear wheel, the chaincase comprising an upper tube member and a lower tube member coupled together at one end at the bottom bracket, and coupled together at an opposite end at an axis of the rear wheel.

27. The bicycle of Claim 17, wherein the receiver of the controller comprises a radio frequency (RF) receiver, wherein the remote control device comprises a RF emitter, wherein the controller is responsive to a signal from the RF emitter to actuate the switch to turn ON the light source when a signal strength received at the RF receiver from the RF emitter is sufficiently strong to be representative of a user of the bicycle being with a defined range of the bicycle.

28. The bicycle of Claim 17, further comprising:
a sensor disposed and configured to sense an ambient environmental condition that includes at least one of an air temperature, an air pressure, a humidity level, a pollen count, and ultraviolet light intensity (UV index);
wherein the sensor is disposed in signal communication with the controller;
wherein the controller is configured to change an operational condition of the light source based on a defined value of the sensed ambient environmental condition.

29. The bicycle of Claim 17, further comprising:
a camera securely arranged with respect to the bicycle and oriented toward a rider of the bicycle in such a manner as to capture an image of the rider and/or rider's clothing when actuated, the camera disposed in signal communication with the controller;
wherein the controller is configured via executable instructions to analyze colors and/or patterns of the rider's clothing, and to control the light source to change a color and/or pattern of the emitted light to match the color and/or pattern of the rider's clothing.

30. The bicycle of Claim 17, further comprising:
a camera obscura securely arranged with respect to the bicycle and oriented toward an ambient scene of the bicycle in such a manner as to provide an image of the ambient scene when actuated, the camera obscura disposed in signal communication with the controller;
wherein the controller is configured via executable instructions to analyze the ambient scene, and to control the light source to change a color and/or pattern of the emitted light to match the color and/or pattern of the ambient scene.

31. The bicycle of Claim 21, wherein:
the power source comprises a battery, a generator, a solar cell, or a combination of a battery, a generator, and a solar cell.

32. The bicycle of Claim 22, wherein:
the flax, hemp fibers, linen fibers, glass fibers, carbon fibers, or any combination of flax, hemp fibers, linen fibers, glass fibers, and carbon fibers are arranged in a plaid pattern, a pinstripe pattern, or a combination of a plaid pattern and a pinstripe pattern.
